# EUROPÄISCHE PATENTSCHRIFT

(11) **EP 1 342 554 B1**
(45) Veröffentlichungstag und Bekanntmachung des Hinweises auf die Patenterteilung: **03.02.2010**
(21) Anmeldenummer: 03004111.5
(22) Anmeldetag: 26.02.2003
(51) Int. Cl.: B29C 70/38, D04C 1/06

(54) **Verfahren zum Herstellen textiler Vorformlinge aus textilen Halbzeugen**
Method for making textile preforms from textile half-products
Procédé pour la fabrication de préformes textiles à partir de produits textiles semi-finis

(30) Priorität: 08.03.2002 DE 10210104; 06.11.2002 DE 10251581
(43) Veröffentlichungstag der Anmeldung: 10.09.2003
(73) Patentinhaber: Airbus Deutschland GmbH, 21129 Hamburg (DE); Fraunhofer-Gesellschaft zur Förderung der angewandten Forschung e.V., 80686 München (DE)
(72) Erfinder: Eberth, Ulrich, Dipl.-Ing., 63897 Miltenberg (DE); Jörn, Paul, Dipl.-Ing., 22763 Hamburg (DE)
(74) Vertreter: Hansmann, Dierk

(56) Entgegenhaltungen:
- EP-A- 0 285 156
- EP-A- 0 531 840
- EP-A- 0 749 825
- GB-A- 2 225 277
- US-A- 5 733 495

## Beschreibung

Die Erfindung betrifft ein Verfahren zum Herstellen textiler Vorformlinge (Preforms) aus textilen Halbzeugen (Vorprodukten), wobei die Vorformlinge für die Herstellung von faserverstärkten Kunststoffen vorgesehen sind, die unter Verwendung eines Matrixsystems mit einem Klebeharz getränkt und unter erhöhter Temperatur sowie gegebenenfalls erhöhtem Druck ausgehärtet werden und die textilen Halbzeuge jeweils auf einem Umformwerkzeug mit einer den späteren Vorformlingen entsprechenden Kontur bzw. angepaßten Geometrie aufgebracht werden.

Bei der Herstellung faserverstärkter Kunststoffe kommen unterschiedliche textile Vorprodukte, im folgenden auch Halbzeuge genannt, zur Anwendung. Neben Geweben und Geflechten können Vliesstoffe und andere textile Flächengebilde eingesetzt werden. Anschließend können diese Halbzeuge in unterschiedlichen Verarbeitungsprozessen konfektioniert und miteinander kombiniert und verbunden werden. Die dabei entstandenen Vorformlinge (Preforms) werden schließlich mit einem Matrixsystem getränkt und meist unter erhöhtem Druck und erhöhter Temperatur ausgehärtet.

Heute werden textile Vorprodukte, wie Gewebe und Geflechte am Ende des Herstellprozesses in oder auf einen Zwischenträger aufgebracht. Bei Geflechten kann es sich dabei um zylindrische Körper handeln, um die diese umlaufend bahnförmig aufgewickelt werden. Die Geometrie dieser Träger dient nicht zum Vor- oder Umformen der Halbzeuge, sondern lediglich als Hilfsmittel zum Transport und zur Lagerung.

Im Laufe des weiteren Herstellungsprozesses werden die Halbzeuge von dem Zwischenträgerkörper wieder entnommen, konfektioniert und anschließend durch Umorientierung und Umformung des Fasergebildes in die gewünschte Form (Preform) gebracht. Hierbei sind einige Faserorientierungen durch den Herstellungsprozeß fixiert und können nachträglich nicht mehr beeinflußt werden. Aus diesem Grund sind bestimmte Bauteilgeometrien mit Halbzeugen, die vorher auf Zwischenträgern aufgebracht wurden, nicht mehr abzubilden, obwohl der eigentliche Herstellprozeß diese Geometrie ermöglichen würde.

In Gebrauch sind auch kontinuierliche Verfahren, bei denen das Vorprodukt direkt nach dem Flächenbildungsprozeß dem weiteren Herstellprozeß zugeführt wird. Die mögliche Umorientierung und Umformung des textilen Halbzeuges geschieht jedoch ohne daß der vorgeschaltete Flächenbildungsprozeß darauf aktiv ausgerichtet ist.

Eine Ausnahme bildet das Umflechten von Kernen, wobei die Kerne einer gewünschten Geometrie von außen umflochten werden, um eine gewünschte Faserorientierung zu erzielen. Die verwendeten Kerne können danach entfernt werden. Die Verwendung von Kernen erlaubt allerdings nur bestimmte Geometrien der Vorprodukte. Außerdem sind die Kerngeometrie und deren Abmaße begrenzt. Eine weitere Ausnahme sind sogenannte Rund- oder Spiralgewebe, in denen die Länge einzelner Fadensysteme (z.B. Kettfäden) variabel gestaltet wird, wodurch eine Richtungsänderung des Halbzeuges in der Ebene erzielt wird.

Die Fixierung von Vorprodukten kann mit Hilfe eines Binders geschehen. Bei den verwendeten Bindersystemen handelt es sich hauptsächlich um thermoplastische Substanzen, die z.B. pulverförmig auf das Halbzeug aufgebracht und unter Temperatureinfluß aktiviert werden. Neben einer Festlegung der Faserorientierung können die Bindersysteme dazu verwendet werden, die Preforms in einem kompaktierten Zustand zu fixieren.

Bei der Flechttechnik kann das zweidimensionale und dreidimensionale Flechten unterschieden werden. Das dreidimensionale Flechten ermöglicht es Halbzeuge mit einer definierten Querschnittsgeometrie zu erstellen, die auch während des Herstellprozesses verändert werden kann. Durch voneinander unabhängige Führung der einzelnen Fäden des Geflechts können L- oder U-förmige Querschnitte der Vorprodukte erzeugt werden. Die entstehenden Fasergebilde sind endkonturnah und weisen ein mäßiges Drapierverhalten auf. Das zweidimensionale Flechten wird in Rundflechtmaschinen realisiert. Bei dem dabei entstehenden Halbzeug handelt es sich um ein schlauchförmiges Gebilde, in das keine Fasern mit einer Orientierung in radialer Richtung (90° zur Oberfläche des Schlauchs) eingebracht werden können.

Zweidimensionale Geflechte sind gut drapierbar und können als flaches oder schlauchförmiges Halbzeug weiterverarbeitet werden, während des Flechtvorgangs ist es möglich, durch Umflechten von Kerngeometrien definierte Faserorientierungen und Halbzeuggeometrien zu erreichen. Durch das Einbringen gestreckter Fasern (Stehfäden) in Abzugsrichtung wird die Drapierfähigkeit in einigen Raumrichtungen vermindert.

Nach der GB-A-2 225 277 ist ein gattungsgemäßes Verfahren bekannt, wobei textile Halbzeuge jeweils auf einen Träger mit einer den späteren Vorformlingen entsprechende Kontur bzw. angepaßten Geometrie aufgebracht werden.

Der Erfindung liegt nun die Aufgabe zugrunde, ein bauteilangepaßtes Fertigungsverfahren der eingangs genannten Art zu schaffen, bei dem nach unterschiedlichen textilen Verfahren hergestellte zwei- oder dreidimensionale Halbzeuge für die textilen Vorformlinge verwendet werden können.

Die Aufgabe wird erfindungsgemäß dadurch gelöst, daß am Ende eines flächen- bildenden Textilprozesses die noch nicht endgültig fixierten Fasern der textilen Halbzeuge durch einen Umform- und Drapiervorgang in eine gewünschte Orientierung gebracht werden.

Ein wesentlicher Vorteil der Erfindung besteht darin, auf Zwischenträger aufgebracht werden, sondern auf einen Träger, der eine dem späteren Bauteil oder Vorformling angepaßte Kontur aufweist. Dabei ist eine Interaktion, d.h. eine Wechselbeziehung, zwischen dem Flächenbildungsprozeß und durch Umformen und Drapieren werden noch verschiebbare Fasern in eine gewünschte Orientierung gebracht. Im Unterschied zum Flechten um Kerne, sind mit dem Verfahren andere Faserorientierungen und Geometrien möglich. Die Abmaße der Vorformlinge und deren Geometrie sind weniger eingeschränkt. So können auch zylindrische Vorformlinge mit in Abzugsrichtung über 360° umlaufenden Fasern gefertigt werden.

Das erfindungsgemäße Verfahren nutzt den Zustand, daß am Ende des flächenbildenden Textilprozesses die Fasern noch nicht endgültig fixiert sind. Durch Umformen und Drapieren werden die an diesem Punkt noch verschiebbaren Fasern in eine gewünschte Orientierung gebracht. Diese Orientierung kann durch einen, in der Geometrie angepaßten Zwischenträger realisiert werden. Das Wegfallen des Zwischenschritts hat den Vorteil, daß Beschädigung und Ondulation der Fasern durch Handhabungen verringert werden können.

Weitere Ausgestaltungen der Erfindung sind durch die Merkmale der Unteransprüche 2 bis 9 gekennzeichnet. Hierbei wird berücksichtigt, daß schon während des Flechtens die Fasern durch entsprechende Umformhilfen und Führungen vororientiert werden können. Der direkt an den textilen Herstellungsprozeß anschließende Umform- und Drapiervorgang ist durch unterschiedliche Verfahren und Werkzeuge realisierbar. Denkbar sind:
I. Ziehen durch ein oder entlang eines Umformwerkzeug (Matrize), das den Querschnitt und teilweise auch die Faserorientierung verändert. Es ermöglicht dadurch auch eine gekrümmte Matrize das Drapieren der Stehfäden im Flechtschlauch.
II. Wickeln auf einen Umformwerkzeug (Matrize), das den Querschnitt und teilweise auch die Faserorientierung verändert.
III. Pressen oder Drücken in oder entlang eines Umformwerkzeuges (Matrize), das den Querschnitt und teilweise auch die Faserorientierung verändert.

Neben dem Umformen und Drapieren kann das Halbzeug gleichzeitig kompaktiert werden.

Die Fixierung der Fasern kann nach dem Umform- und Drapierungsvorgang über die Fasern selbst, einen Binder oder über ein Matrixsystem geschehen:
a) Fixierung durch die Fasern selbst: Durch die Reibung, die die Fasern gegeneinander haben, wird ein Verrutschen verhindert.
b) Fixierung durch Binder: Durch Einbringen eines Binders vor, während oder nach dem Umform- bzw. Drapierungsvorganges werden die Fasern fixiert.
c) Fixieren durch Matrixmaterial: Vor, während oder nach dem Umform- bzw. Drapierungsvorganges wird der Matrixwerkstoff in die Fasern eingebracht und
d) teilweise oder vollständig gehärtet oder die Viskosität des Harzes herabgesetzt.
Dieses ermöglicht die Fixierung der Fasern.

Für das erfindungsgemäße Verfahren sind grundsätzlich viele unterschiedliche textile Herstellungsverfahren denkbar, wie:
a) Textile Herstellungsverfahren für zweidimensionale Gebilde (z.B. 2D-Weben, 2D-Wirken, Stricken, 2D-Flechten, Vliesstoffe) oder
b) Textile Herstellungsverfahren für dreidimensionale Gebilde (z.B. 3D-Weben, Abstandsgewirke, Stricken, 3D-Flechten)

In der Zeichnung ist ein Ausführungsbeispiel nach der Erfindung dargestellt und es zeigen:
Fig. 1 ein Blockdiagramm für einen Ablauf eines Verfahrens, und
Fig. 2a und 2b eine Vorrichtung zur Durchführung des Verfahrens gemäß Fig. 1 in Vorder- und Seitenansicht.

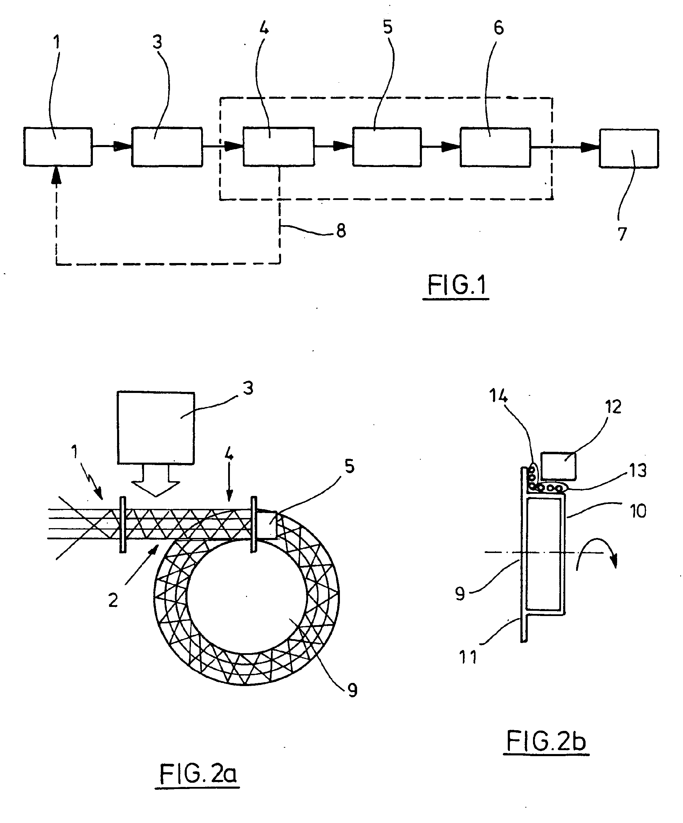

In Fig. 1 sind zur Erklärung des allgemeinen Konzeptes am Beispiel eines Textilprozesses folgende Verfahrensschritte in Form von Blöcken zum Herstellen eines textilen Vorformlings aus einem textilen Halbzeug (Vorprodukt) zeichnerisch dargestellt: flechtprozeß 1 für ein lockeres und drapierfähiges Vorgeflecht 2; möglicher Auftrag 3 eines Binders auf das Vorgeflecht, z.B. pulverförmigen Binders; Umform- bzw. Drapiervorgang 4 des Vorgeflechts 2; Fixieren 5 des Vorgeflechts 2 zu einem textilen Halbzeug; Aufbringen 6 des textilen Halbzeuges auf einen Träger sowie anschließende Verarbeitung 7 des Halbzeuges zu einem textilen Vorformling, der für die Herstellung eines faserverstärkten Kunststoffgegenstandes vorgesehen ist. Zwischen dem Flechtprozess 1, d. h. dem Flächenbildungsprozess 1, und dem Umform- bzw. Drapiervorgang 4 kann eine Wechselwirkung stattfinden, welches durch die Verbingungslinie 8 verdeutlicht ist.

Die aus Fig. 2a und Fig. 2b ersichtliche prinzipielle Vorrichtung, neben der auch andere Vorrichtungsbeispiele möglich sind, zeigt ein rotierendes Umformwerkzeug 9, welches eine Trommel 10 mit einer seitlich an der Trommel 10 befestigten Begrenzungsscheibe 11 aufweist, deren Durchmesser über den Durchmesser der Trommel 10 hinausgeht. Auf die Trommel 10 wird das lockere, drapierfähige und eventuell mit einem Binderauftrag versehene Vorgeflecht 2 aufgelegt, wobei die Trommel 10 gleichzeitig zur fixierten Lagerung des Vorgeflechtes 2 als auch zum Transport des umgeformten Halbzeuges dient. Wie aus Fig. 2b zu entnehmen ist, können zusätzliche Umform- und Anpressrollen 12 für das Halbzeug vorgesehen sein, die gegebenenfalls auch mit einer Heiz- oder auch Kühlvorrichtung für den Binder ausgerüstet sind. Wie der Fig. 2b weiterhin zu entnehmen ist, können Stehfäden, d.h. gestreckte Fasern, gleicher Länge 13 auf dem Umfang der Trommel 10 angeordnet sein, während Stehfäden mit variabler Länge 14 an der überstehenden Ringfläche der Begrenzungsscheibe 11 anliegen.

Ein ähnliches Prinzip wird auch bei der Webtechnik angewendet, in dem die Länge einzelner Fadensysteme (z.B. Kettfäden) variabel gestaltet wird. Somit wird eine Richtungsänderung in der Ebene der textilen Fläche erzielt. Eine solche Technik wird für sogenannte Rund- oder Spiralgewebe angewandt. Allerdings geschieht diese Richtungsänderung ausschließlich in einer Ebene. Das neue Konzept würde durch Umformen und Drapieren direkt nach dem Webprozess auch eine zweidimensionale Halbzeuggeometrie zulassen.

## Patentansprüche

1. Verfahren zum Herstellen textiler Vorformlinge (Preforms) aus textilen Halbzeugen (Vorprodukten), wobei die Vorformlinge für die Herstellung von faserverstärkten Kunststoffen vorgesehen sind, die unter Verwendung eines Matrixsystems mit einem Klebeharz getränkt und unter erhöhter Temperatur sowie gegebenenfalls erhöhtem Druck ausgehärtet werden und die textilen Halbzeuge jeweils auf einem Umformwerkzeug mit einer den späteren Vorformlingen entsprechenden Kontur bzw. angepaßten Geometrie aufgebracht werden, **dadurch gekennzeichnet, daß** am Ende eines faserangeordneten zwei- oder dreidimensionalen Teilprozesses (1) die noch nicht endgültig fixierten Fasern (14) der textilen Halbzeuge durch einen Umform- und Drapiervorgang (4) in eine gewünschte Orientierung gebracht werden

2. Verfahren nach Anspruch 1, **dadurch gekennzeichnet, dass** die unfixierten Fasern (14) durch Ziehen durch bzw. entlang eines den Querschnitt und zum Teil auch die Orientierung der Fasern verändernden Umformwerkzeuges (9) orientiert werden.

3. Verfahren nach Anspruch 2, **dadurch gekennzeichnet, dass** als Umformwerkzeug (9) eine gekrümmte Matrize zum Drapieren definierter in den Prozess einlaufender Halbzeuge, die auch Stehfäden enthalten können in einem textilen Halbzeug verwendet wird.

4. Verfahren nach Anspruch 1, **dadurch gekennzeichnet, dass** die unfixierten Fasern durch Wickeln oder Ablegen auf einem den Querschnitt des textilen Halbzeuges und zum Teil auch die Orientierung der Fasern verändernden Umformwerkzeug (9) orientiert werden.

5. Verfahren nach Anspruch 1, **dadurch gekennzeichnet dass** die unfixierten Fasern durch Pressen oder Drücken in oder entlang eines den Querschnitt des textilen Halbzeuges und zum Teil auch die Orientierung der Fasern verändernden Umformwerkzeuges (9) orientiert werden.

6. Verfahren nach Anspruch 4 oder 5, **gekennzeichnet durch** die Verwendung einer Matrize als Umformwerkzeug (9).

7. Verfahren nach einem der Ansprüche 1, 2, 3, 4, 5 oder 6, **dadurch gekennzeichnet, dass** die Fasern durch die ein Verrutschen verhindernde Reibung der Fasern gegeneinander fixiert werden.

8. Verfahren nach einem der Ansprüche 1' 2, 3, 4, 5 oder 6, **dadurch gekennzeichnet, dass** die Fasern durch Einbringung eines Binders vor, während oder nach einem Umform- bzw. Drapierungsvorgang fixiert werden.

9. Verfahren nach einem der Ansprüche 1' 2, 3, 4, 5 oder 6, **dadurch gekennzeichnet, dass** die Fasern durch Einbringung und teilweise oder vollständige Aushärtung des Matrixwerkstoffes vor, während oder nach einem Umform- bzw. Drapierungsvorgang (4) fixiert werden.

## Claims

1. Method of manufacturing textile preforms from textile semi-finished products (intermediate products), wherein the preforms are intended for the manufacture of fibre-reinforced plastics materials, which with simultaneous use of a matrix system are impregnated with an adhesive resin and cured under increased temperature and optionally increased pressure and the textile semi-finished products are applied in each case on a forming tool having a contour corresponding to the subsequent preforms and/or a geometry adapted to the subsequent preforms, **characterized in that** at the end of a fibre-oriented two- or three-dimensional partial process (1) the not yet finally fixed fibres (14) of the textile semi-finished products are brought into a desired orientation by means of a forming- and draping operation (4).

2. Method according to claim 1, **characterized in that** the unfixed fibres (14) are oriented by drawing through and/or along a forming tool (9) that varies the cross section and in part also the orientation of the fibres.

3. Method according to claim 2, **characterized in that** as forming tool (9) a curved matrix is used to drape defined semi-finished products, which enter the process and may also contain stationary threads, in a textile semi-finished product.

4. Method according to claim 1, **characterized in that** the unfixed fibres are oriented by winding or depositing on a forming tool (9) that varies the cross section of the textile semi-finished product and in part also the orientation of the fibres.

5. Method according to claim 1, **characterized in that** the unfixed fibres are oriented by moulding or pressing in or along a forming tool (9) that varies the cross section of the textile semi-finished product and in part also the orientation of the fibres.

6. Method according to claim 4 or 5, **characterized by** the use of a matrix as forming tool (9).

7. Method according to one of claims 1, 2, 3, 4, 5 or 6, **characterized in that** the fibres are fixed relative to one another as a result of the friction of the fibres preventing slippage.

8. Method according to one of claims 1, 2, 3, 4, 5 or 6, **characterized in that** the fibres are fixed by introducing a binding agent before, during or after a forming- and/or draping operation.

9. Method according to one of claims 1, 2, 3, 4, 5 or 6, **characterized in that** the fibres are fixed by introducing and partially or completely curing the matrix material before, during or after a forming-and/or draping operation.

## Revendications

1. Procédé de fabrication d'ébauches (préformes) textiles à partir de produits semi-finis textiles (semi-produits), les ébauches étant prévues pour la fabrication de matières synthétiques renforcées de fibres qui sont imprégnées au moyen d'une résine adhésive en utilisant un système matriciel et qui sont durcies sous une température plus élevée ainsi que, le cas échéant, sous l'effet d'une pression plus élevée, et les semi-produits textiles étant chacun mis en place sur un outil de formage doté d'un contour qui correspond aux ébauches ultérieures, c'est-à-dire doté d'une géométrie adaptée aux ébauches ultérieures, **caractérisé en ce qu'**à la fin d'un processus partiel (1) d'agencement des fibres, opérant en deux ou en trois dimensions, les fibres (19) des semi-produits qui ne sont pas encore définitivement fixées sont amenées dans une orientation souhaitée grâce à une opération de formage et de drapement (4).

2. Procédé selon la revendication 1, **caractérisé en ce que** les fibres (14) qui ne sont pas fixées sont orientées par traction dans, ou le long d'un outil de formage (9) qui modifie la section et partiellement aussi l'orientation des fibres.

3. Procédé selon la revendication 2, **caractérisé en ce que** l'on utilise dans un semi-produit textile en tant qu'outil de formage (9) une matrice courbe en vue de draper des semi-produits définis entrant dans le processus, lesquels peuvent également contenir des fils dressés.

4. Procédé selon la revendication 1, **caractérisé en ce que** les fibres qui ne sont pas fixées sont orientées en étant enroulées ou déposées sur un outil de formage (9) qui modifie la section du semi-produit textile et partiellement également l'orientation des fibres.

5. Procédé selon la revendication 1, **caractérisé en ce que** les fibres qui ne sont pas fixées sont orientées par pressage, ou compression dans ou le long d'un outil de formage (9) qui modifie la section du semi-produit textile et partiellement également l'orientation des fibres.

6. Procédé selon la revendication 4 ou 5, **caractérisé par** l'utilisation d'une matrice en tant qu'outil de formage (9).

7. Procédé selon une des revendications 1, 2, 3, 4, 5 ou 6, **caractérisé en ce que** les fibres sont fixées du fait du frottement des fibres les unes contre les autres qui empêche un glissement.

8. Procédé selon une des revendications 1, 2, 3, 4, 5 ou 6, **caractérisé en ce que** les fibres sont fixées grâce à l'adjonction d'un liant avant, pendant ou après une opération de formage, ou de drapement.

9. Procédé selon une des revendications 1, 2, 3, 4, 5 ou 6, **caractérisé en ce que** les fibres sont fixées grâce à l'adjonction du matériau de matrice et au durcissement partiel ou complet de celui-ci, avant, pendant ou après une opération (4) de formage, ou de drapement.
